# EUROPÄISCHE PATENTANMELDUNG

(11) **EP 4 847 117 A1**
(43) Veröffentlichungstag der Anmeldung: **02.12.2026**
(21) Anmeldenummer: 25192411.4
(22) Anmeldetag: 29.07.2025
(51) Int. Cl.: B01D 53/78, B01D 15/08, B01D 53/00, B01D 53/14, C01B 32/50, F25J 3/06, B01D 53/56

(54) **VERFAHREN UND ANLAGE ZUR BEREITSTELLUNG VON KOHLENDIOXID**

(30) Priorität: 28.05.2025 EP 25179496
(71) Anmelder: Linde GmbH, 82049 Pullach (DE)
(72) Erfinder: Fitzthum, Mario, 82049 Pullach (DE); Leitmary, Werner, 82049 Pullach (DE); Spenner, Dirk, 82049 Pullach (DE); Stoffregen, Torsten, 82049 Pullach (DE); Voloshchuk, Yury, 82049 Pullach (DE)
(74) Vertreter: Grundner, Sebastian

(57) **Zusammenfassung**

Es wird ein Verfahren (100) zur Bereitstellung von flüssigem und/oder gasförmigen Kohlendioxidvorgeschlagen, wobei ein Kohlendioxid und ein oder mehrere Stickoxide enthaltendes Gasgemisch (3) unter Erhalt eines Folgegemischs (15) einer Vorbehandlung unterworfen wird, die einen oder mehrere Behandlungsschritte (121, 123, 124) umfasst, in dem oder denen Komponenten des Gasgemischs (3) in eine oder mehrere wässrige Fraktionen (5, 10, 14) überführt werden, wobei das Folgegemisch (15), oder ein Teil hiervon, einer Verflüssigung unter Erhalt einer Flüssigphase unterworfen wird, und wobei die Flüssigphase, oder ein Teil hiervon, einer Aufreinigung (126) unterworfen wird, die die Verwendung einer Adsorptionseinheit umfasst, in der Stickstoffdioxid adsorptiv abgetrennt werden, und die unter Bildung eines mit Stickoxiden beladenen Regeneriergasstroms (16) regeneriert wird, und wobei der beladene Regeneriergasstrom (16) oder ein oder mehrere Anteile hiervon als ein oder mehrere Rückführströme (21, 22, 23) an einer Position, die stromauf des einen oder zumindest eines der mehreren Behandlungsschritte (121, 123, 124) liegt, in die Vorbehandlung zurückgeführt wird oder werden. Eine entsprechende Anlage wird ebenfalls vorgeschlagen.

## Beschreibung

### Gebiet

Die Erfindung betrifft ein Verfahren und eine Anlage zur Bereitstellung von flüssigem und/oder gasförmigen Kohlendioxid.

### Hintergrund

Zur Dekarbonisierung industrieller Prozesse existieren unterschiedliche Ansätze. Neben einer Erhöhung von Wirkungsgraden und damit der Verringerung der Bildung von Kohlendioxid, der Verwendung alternativer Brennstoffe wie Wasserstoff oder Ammoniak, oder der Elektrifizierung kann auch eine Abtrennung und Speicherung von gebildetem Kohlendioxid (engl. Carbon Capture and Storage, CCS) erfolgen.

Insbesondere Rauchgase enthalten neben Kohlendioxid auch immer gewisse Mengen an Stickoxiden, welche bei der Abscheidung von Kohlendioxid ungewollt mit in den abgetrennten Kohlendioxidstrom gelangen. Diese Stickoxide müssen in bestimmten Fällen entfernt werden, beispielsweise um die zum Teil sehr hohen Reinheitsanforderungen an Kohlendioxid (z.B. für den Einsatz im Lebensmittelbereich oder für Sequestrierung) zu erreichen. Es gilt, hier Verbesserungen zu schaffen, die die unten erläuterten Nachteile bekannter Verfahren überwinden.

### Übersicht

Vor diesem Hintergrund werden ein Verfahren und eine Anlage zur Bereitstellung von flüssigem und/oder gasförmigen Kohlendioxid mit den Merkmalen der jeweiligen unabhängigen Patentansprüche vorgeschlagen. Ausgestaltungen sind Gegenstand der abhängigen Patentansprüche und der nachfolgenden Beschreibung.

In dem vorgeschlagenen Verfahren wird ein Kohlendioxid und ein oder mehrere Stickoxide enthaltendes Gasgemisch unter Erhalt eines Folgegemischs einer Vorbehandlung unterworfen, die einen oder mehrere Behandlungsschritte umfasst, in dem oder denen Komponenten des Gasgemischs in eine oder mehrere wässrige Fraktionen überführt werden. Das Folgegemisch, oder ein Teil hiervon, wird einer Verflüssigung unter Erhalt einer Flüssigphase unterworfen.

Die Flüssigphase, oder ein Teil hiervon, wird einer Aufreinigung unterworfen, die die Verwendung einer Adsorptionseinheit umfasst, in der Stickstoffdioxid adsorptiv aus der Flüssigphase, oder einem Teil hiervon, nach der Verflüssigung abgetrennt wird. Die Adsorptionseinheit wird unter Bildung eines mit dem Stickstoffdioxid beladenen Regeneriergasstroms regeneriert. Der auf diese Weise beladene Regeneriergasstrom, oder ein oder mehrere Anteile hiervon, wird oder werden in dem vorgeschlagenen Verfahren als ein oder mehrere Rückführströme an einer Position, die stromauf des einen oder zumindest eines der mehreren Behandlungsschritte liegt, in die Vorbehandlung zurückgeführt.

Als Vorteile des vorgeschlagenen Verfahrens ergibt sich durch die Rückführung eine Verringerung von Stickoxidemissionen, da das Stickstoffdioxid gezielt abgetrennt bzw. in den Reinigungsstufen, hier allgemein als "Behandlungsschritte" bezeichnet, umgesetzt werden kann. Da typischerweise als Regeneriergas in der Adsorptionseinheit Kohlendioxid oder ein kohlendioxidreiches bzw. Kohlendioxid enthaltendes Gasgemisch verwendet wird, ergibt sich ferner eine Reduzierung von Kohlendioxidverlusten.

In Ausgestaltungen des vorgeschlagenen Verfahrens wird Stickstoffdioxid in der Adsorptionseinheit aus der Flüssigphase oder dem entsprechend behandeltem Teil hiervon abgetrennt. Falls enthalten, können im Zuge des vorgeschlagenen Verfahrens aber auch andere Stickoxide entfernt werden. In dem Verfahren kann insbesondere auch eine Umwandlung von Stickstoffmonoxid in Stickstoffdioxid zugelassen, gefördert und/oder ausgenutzt werden, da sich Stickstoffdioxid besonders effektiv oder überhaupt adsorptiv abtrennen lässt.

Die Umwandlung von Stickstoffmonoxid in Stickstoffdioxid ist eine an sich bekannte chemische Reaktion, die sowohl in der natürlichen Atmosphäre als auch in technischen Prozessen regelmäßig abläuft. Stickstoffmonoxid ist selbst relativ bzw. vergleichsweise reaktionsträge, reagiert jedoch beispielsweise in Luft oder anderen Gasgemischen mit molekularen Sauerstoff zu Stickstoffdioxid.

In Ausgestaltungen des vorgeschlagenen Verfahrens wird das Gasgemisch unter Verwendung einer insbesondere zur selektiven katalytischen oder nichtkatalytischen Reduktion eingerichteten Entstickungseinrichtung aus einem Rohrauchgas gebildet, und der eine oder die mehreren Rückführströme wird oder werden an einer Position, die stromab der Entstickungseinrichtung liegt, in die Vorbehandlung zurückgeführt. Auf diese Weise wird die Entstickungseinrichtung durch die Rückführströme nicht zusätzlich belastet und diese kann unverändert weiter betrieben werden.

In Ausgestaltungen des vorgeschlagenen Verfahrens wird das Rohrauchgas unter Verwendung einer Einrichtung bereitgestellt, die zur Durchführung einer Verbrennung mit Sauerstoffnutzung eingerichtet ist, und die zur Zement-, Stahl- und/oder Glasproduktion, Müllverbrennung, Kohle- und/oder Gasverstromung, Klärschlamm- und/oder Biomasseverbrennung oder einer Kombination hiervon eingerichtet ist. Auch bekannte Oxyfuel-Prozesse profitieren von den hier vorgeschlagenen Maßnahmen. Im Allgemeinen handelt es sich um kohlendioxidintensive Prozesse, die von einer Rückgewinnung des Kohlendioxids in besonderer Weise profitieren.

In Ausgestaltungen des vorgeschlagenen Verfahrens umfasst bzw. umfassen der eine die mehreren Behandlungsschritte eine Niederdruckwäsche bei 0,9 bis 10 bar Absolutdruck (abs.) mit einem wässrigen Waschmittel, eine Verdichtung und Kondensatabtrennung und/oder eine Hochdruckwäsche bei 15 bis 50 bar (abs.) mit einem wässrigen Waschmittel. Die Rückführung kann je nach Druckbedingungen des Regeneriergases an geeigneter Stelle erfolgen, und die Rückführung kann in Teilmengen erfolgen, die die genannten Behandlungsschritte jeweils nicht überlasten.

Das Stickstoffdioxid kann nach dessen Abtrennung aus der einen oder den mehreren wässrigen Fraktionen aus den Behandlungsschritten, d.h. insbesondere Kondensaten und/oder beladenem Waschwasser aus einer oder mehreren Wasserwäschen, zurückgewonnen oder katalytisch oder chemisch umgesetzt werden. Dieses gelangt daher nicht in die Umwelt oder in ein Produkt.

Die Adsorptionseinheit kann in Ausgestaltungen des vorgeschlagenen Verfahrens für eine Regenerierung mit gasförmigem, erwärmtem Kohlendioxid oder Kohlendioxid enthaltendem Gas als Regeneriergas eingerichtet sein, sodass der mit dem Stickstoffdioxid beladene Regeneriergasstrom das für die Regenerierung eingesetzte Kohlendioxid des Regeneriergases enthält, und das in dem beladenen Regeneriergasstrom enthaltene Kohlendioxid in dem einen oder den mehreren Rückführströme rückgeführt wird. Das Kohlendioxid, das zur Regeneration eingesetzt wird, geht auf diese Weise nicht dem Abscheidungsprozess verloren.

In Ausgestaltungen des vorgeschlagenen Verfahrens kann das Folgegemisch oder ein hieraus gebildetes weiteres Folgegemisch, oder auch die Flüssigfraktion, mit einem Gehalt von 1 bis 500 ppmv (Millionstel Teile auf Volumenbasis) Stickstoffdioxid zugeführt werden. Der Adsorptionseinheit kann ein an Stickstoffdioxid abgereichertes flüssiges Kohlendioxid, d.h. die von dem einen oder den mehreren Stickoxid befreite Flüssigphase oder der Teil hiervon, mit einem Gehalt von üblicherweise weniger als 1.5 bis 2.5 ppmv Stickstoffdioxid entnommen werden. Dieses kann daher für kritische Anwendungen wie beispielsweise die Lebensmittelindustrie eingesetzt werden.

Der Begriff "befreit" soll hier so verstanden werden, dass eine Reduzierung des Gehalts an Stickstoffdioxid auf einen entsprechend niedrigen Wert erfolgt. Eine Entfernung "auf null" ist hiervon nicht notwendigerweise umfasst bzw. technisch sehr aufwendig oder praktisch nicht möglich.

Allgemein kann das der Adsorptionseinheit entnommene, flüssige und von dem Stickstoffdioxid befreite Kohlendioxid in ein Kohlendioxidprodukt überführt werden. Auch eine Sequestrierung oder dergleichen ist möglich.

Die vorgeschlagene Anlage ist zur Bereitstellung von flüssigem und/oder gasförmigen Kohlendioxid eingerichtet. Die Anlage ist dafür eingerichtet, ein Kohlendioxid und ein oder mehrere Stickoxide enthaltendes Gasgemisch unter Erhalt eines Folgegemischs einer Vorbehandlung zu unterwerfen, die einen oder mehrere Behandlungsschritte umfasst, der oder die dafür eingerichtet ist oder sind, Komponenten des Gasgemischs in eine oder mehrere wässrige Fraktionen zu überführen. Die Anlage ist ferner dafür eingerichtet, das Folgegemisch, oder einen Teil hiervon, einer Verflüssigung unter Erhalt einer Flüssigphase zu unterwerfen.

Ferner ist die Anlage dafür eingerichtet, die Flüssigphase, oder einen Teil hiervon, einer Aufreinigung zu unterwerfen, die die Verwendung einer Adsorptionseinheit umfasst, welche dafür eingerichtet ist, Stickstoffdioxid adsorptiv aus der Flüssigphase, oder einem Teil hiervon, abzutrennen, und die zur Regenerierung unter Bildung eines mit dem Stickstoffdioxid beladenen Regeneriergasstroms eingerichtet ist. Die Anlage ist dafür eingerichtet ist, den Regeneriergasstrom oder einen oder mehrere Anteile hiervon als einen oder mehrere Rückführströme an einer Position, die stromauf des einen oder zumindest eines der mehreren Behandlungsschritte liegt, in die Vorbehandlung (gasförmig) zurückzuführen.

Zu weiteren Merkmalen und Vorteilen der vorgeschlagenen Anlage und ihrer Ausgestaltungen sei auf die oben erläuterten Merkmale und Vorteile des vorgeschlagenen Verfahrens und seiner Ausgestaltungen ausdrücklich verwiesen, da diese für die Anlage in im Wesentlichen gleicher Weise gelten.

Entsprechendes gilt auch für eine Anlage, die gemäß einer hier vorgeschlagenen Ausgestaltung dazu eingerichtet sein kann, ein Verfahren gemäß einer entsprechenden Ausgestaltung durchzuführen.

### Zeichnungen

Ausführungsformen werden nachfolgend rein beispielhaft unter Bezugnahme auf die beigefügte Zeichnung beschrieben, wobei

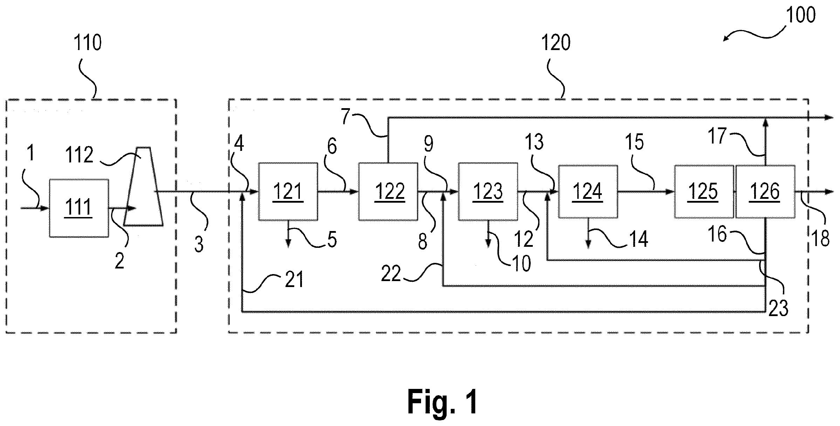

Figur 1 ein Verfahren gemäß einer Ausgestaltung schematisch veranschaulicht.

### Ausführungsformen

Die nachfolgend beschriebenen Ausführungsformen und Ausgestaltungen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale vorgeschlagener Verfahren und Vorrichtungen nicht abschließend und/oder beschränkend betrachtet werden.

Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Ansprüche oder als Beschränkungen von Äquivalenten hierzu zu betrachten sind, und dass andere Ausführungsformen verwendet und Änderungen vorgenommen werden können, ohne vom Umfang der Ansprüche abzuweichen.

Unterschiedliche Ausführungsformen können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus können andere Ausgestaltungen umfasst sein, die gegenwärtig nicht beansprucht sind, die aber in Zukunft beansprucht werden könnten, insbesondere wenn sie vom Umfang der unabhängigen Ansprüche umfasst sind.

Erläuterungen, die sich auf Vorrichtungen, Apparate, Anordnungen, Systeme usw. gemäß vorgeschlagenen Ausführungsformen beziehen, können auch für Verfahren, Prozesse, Methoden usw. gemäß anderen Ausführungsformen gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die nachfolgenden Erläuterungen und Definitionen, die einige Grundlagen der Erfindung betreffen, können für alle oder einen Teil der hier vorgestellten Ausgestaltungen gelten, und die Erläuterung bestimmter Aspekte im Zusammenhang mit nur einem Teil oder einer der Ausgestaltungen soll nicht dahingehend verstanden werden, dass diese Aspekte nicht auch mit anderen oder allen Ausgestaltungen, soweit technisch möglich und sinnvoll, verwirklicht sein können.

Die Konjunktion "und/oder" soll, wenn in einer Aufzählung vor dem letzten Begriff der Aufzählung verwendet, so verstanden werden, dass alle in der Aufzählung genannten Begriffe beliebig miteinander kombiniert werden können. Mit anderen Worten ist mit "A, B und/oder C" "A und/oder B und/oder C" oder "wenigstens eines der Elemente A, B und C in beliebiger Kombination" gemeint.

Flüssige, gasförmige, feste oder überkritische Komponentengemische können im hier verwendeten Sprachgebrauch reich oder arm an einer oder an mehreren Komponenten sein, wobei "reich" für einen Gehalt von wenigstens 50%, 75%, 90%, 95%, 99%, 99,5%, 99,9% oder 99,99% und "arm" für einen Gehalt von höchstens 50%, 25%, 10%, 5%, 1%, 0,1% oder 0,01% auf Mol-, Gewichts- oder Volumenbasis stehen kann. Der Begriff "überwiegend" kann der Definition von "reich" entsprechen.

Flüssige, gasförmige, feste oder überkritische Komponentengemische können im hier verwendeten Sprachgebrauch ferner angereichert oder abgereichert an einer oder mehreren Komponenten sein, wobei sich diese Begriffe auf einen Gehalt in einem Ausgangsgemisch beziehen, unter Verwendung das betrachtete Komponentengemisch gebildet wurde. Ein Komponentengemisch ist dabei "angereichert", wenn es zumindest den 2-fachen, 5-fachen, 10-fachen, 100-fachen oder 1.000-fachen Gehalt der bezeichneten Komponente(n) aufweist, und "abgereichert", wenn es höchstens den 0,5-fachen, 0,1-fachen, 0,01-fachen oder 0,001-fachen Gehalt der bezeichneten Komponente(n) aufweist, jeweils in Bezug auf das Ausgangsgemisch, unter Verwendung dessen das betrachtete Komponentengemisch gebildet wurde.

Mit dem Begriff "im Wesentlichen bestehend aus" und entsprechenden grammatikalischen Abwandlungen seien flüssige, gasförmige, feste oder überkritische Reinstoffe oder Komponentengemische verstanden, die neben einem oder mehreren genannten Bestandteilen einen oder mehrere weitere Bestandteile aufweisen können, sofern sich die wesentlichen Merkmale der durch den oder die weiteren Bestandteile nicht signifikant ändern. Ein "im Wesentlichen" aus einer oder mehreren Komponenten bestehender flüssiger, gasförmiger, fester oder überkritischer Reinstoff oder ein entsprechendes Komponentengemisch weist den oder die genannten Bestandteile zumindest in einem Gehalt oder Summengehalt auf, der der Definition von "reich" entspricht, und den oder die weiteren Bestandteile in einem Gehalt oder Summengehalt, der der Definition von "arm" entspricht. Insbesondere kann ein "im Wesentlichen" eine oder mehrere Komponenten enthaltender flüssiger, gasförmiger, fester oder überkritischer Reinstoff oder ein entsprechendes Komponentengemisch als ein Reinstoff oder Komponentengemisch verstanden werden, bei dem ein Gehalt oder Summengehalt an der einen oder den mehreren benannten Komponenten bei mehr als 90%, 95%, 99%, 99,5% oder 99,9% auf Mol-, Gewichts- oder Volumenbasis liegt.

Wird ein Gas, eine Flüssigkeit, ein Feststoff oder ein überkritisches Fluid vorliegend mit dem Namen einer Komponente wie beispielsweise "Kohlendioxid" bezeichnet, soll hierunter auch ein Gas, eine Flüssigkeit, ein Feststoff oder ein überkritisches Fluid **verstanden** werden, das, die oder der reich an der entsprechenden Komponente ist, aber nicht ausschließlich hieraus bestehen muss. Das Gas, die Flüssigkeit, der Feststoff oder das überkritische Fluid kann in diesem Fall auch im Wesentlichen aus der Komponente bestehen.

Der Begriff "Stickoxide" soll vorliegend sämtliche Verbindungen zwischen Stickstoff und Sauerstoff, insbesondere, aber nicht ausschließlich, Stickstoffmonoxid, NO, und Stickstoffdioxid, NO₂, bezeichnen. Ist hier von "Stickoxiden" im Plural die Rede, kann sich diese Bezeichnung an jeder Stelle auch lediglich auf ein Stickstoffoxid, insbesondere Stickstoffdioxid, beziehen, welches im hier betrachteten Zusammenhang besonders relevant ist.

Bei der Dekarbonisierung von Rauchgasen mittels unterschiedlicher Technologien wie Aminwäschen, Wäschen unter Verwendung von heißem Kaliumcarbonat (engl. Hot Potassium Carbonate, HPC), Verfahren auf Basis der Druckwechseladsorption oder aus Oxyfuelverfahren enthält das Rauchgas neben Kohlendioxid als abzutrennender Komponente, wie eingangs erwähnt auch Stickoxide, welche bei der Abscheidung des Kohlendioxids ungewollt mit in den abgetrennten Kohlendioxidstrom gelangen. Es handelt sich dabei insbesondere um Stickstoffdioxid.

Nach der Kohlendioxidreinigung und Kohlendioxidverflüssigung kann Stickstoffdioxid, das auch in stromaufwärtigen Schritten aus Stickstoffmonoxid gebildet werden kann, im flüssigen Kohlendioxid landen und ggf. zulässige Grenzwerte in einem entsprechenden Kohlendioxidprodukt überschreiten.

Zurzeit werden Adsorber für Stickoxide, d.h. insbesondere Stickstoffdioxid (engl. Polisher) im Zusammenhang mit der Kohlendioxidverflüssigung hauptsächlich im Lebensmittelbereich zu Erreichung der niedrigen, zulässigen Grenzwerte im Kohlendioxidprodukt eingesetzt. Dabei wird das Kohlendioxid durch Betten mit einem Adsorbens geführt und Stickstoffdioxid, das nicht in einer vorgeschalteten Rektifikationskolonne entfernt werden kann, wird adsorbiert. Bei höheren Gehalten oder größeren Mengenströmen wird das Bett regenerierbar ausgeführt, wie an sich im Bereich der Adsorptionstechnik üblich, wobei typischerweise zwei oder mehr Betten in entsprechenden Adsorberbehältern im Wechselbetrieb arbeiten. Das diskontinuierlich anfallende, mit Stickstoffdioxid beladene Regeneriergas, zum Teil mit hohen Konzentrationen, kann dabei zur Atmosphäre abgeblasen werden. Alternativ kann das beladene Regeneriergas auch zu einer der Anlage zur Kohlendioxidentfernung vorgeschalteten Stickoxidentfernung (meist eine katalytische Entstickungseinheit) auf Seite des Rauchgasproduzenten zurückgeführt werden.

Bei großtechnischen Anlagen zur Dekarbonisierung von gesamten Industriezweigen durch Entfernung von Stickoxiden aus Rauchgasen, wie z.B. Zementanlagen, Müllverbrennungsanlagen und dergleichen, stellt die Abtrennung von Stickoxiden von der eigentlichen Produktkomponente des Rauchgases, Kohlendioxid, eine Herausforderung dar. Einer der letzten Aufreinigungsschritte stellt bei allen Verfahren meist eine Verflüssigung durch Kondensation von Kohlendioxid dar, bei der es zu einer nicht vermeidbaren Umsetzung von Stickstoffmonoxid zu Stickstoffdioxid kommt. Daher wird ein regenerierbarer Stickoxidadsorber benötigt, der die zum Teil noch hohen Stickstoffdioxidgehalte im flüssigen Kohlendioxid von der Rektifikationskolonne zur weiteren Trennung entfernen muss. Das beladene Regeneriergas kann zum Teil hohe Stickstoffdioxidgehalte aufweisen, und zwar insbesondere zu Beginn der Regenerierung, aber je nach zeitlicher Fahrweise auch verzögert und gestreckt während des Regenerierungsschritts. Dieses Regeneriergas soll oder darf nicht zur Atmosphäre abgegeben werden und auch die Rückführung zu bestehenden Entstickungseinrichtungen aufseiten des Rauchgasproduzenten ist je nach eingesetzter Technologie nicht möglich oder gewünscht. Daher muss das stickoxidhaltige bzw. stickstoffdioxidhaltige Regeneriergas möglichst in den Prozess zurückgeführt werden bzw. separat behandelt werden.

Aspekte hier vorgeschlagener Verfahren umfassen eine vorteilhafte Prozessverschaltung, bei der das Regeneriergas aus dem Stickoxidadsorber bzw. Stickstoffdioxidadsorber, mit temporär hohen Gehalten an Stickstoffdioxid, anstatt zur Atmosphäre an geeigneter Stelle in den Prozess zurückgeführt wird. Dadurch wird das im Regeneriergas enthaltene Kohlendioxid recycelt, sodass entsprechende Verluste vermieden werden, und auch das Stickstoffdioxid kann im Prozess wieder abgeschieden werden, wie auch nachfolgend erläutert. Eine Rückführung zum Rauchgasproduzenten ist nicht erforderlich, sodass keine Anpassungen der bestehenden Entstickungseinrichtungen, beispielsweise in einem Zementwerk, erforderlich sind.

In hier vorgeschlagenen Ausgestaltungen wird das heiße, mit Stickstoffdioxid beladene Regeneriergas aus einem entsprechenden Adsorber gekühlt und in den Prozess zurückgeführt. Dazu kann es insbesondere zu einer vom Druck her geeigneten Kompressionsstufe eines Kohlendioxidverdichters, zu einem vorgeschalteten Direktkühler oder zu einer Waschkolonne zurückgeführt werden. Auch eine Rückführung zu einer Hochdruckabscheidung, beispielsweise einer alkalischen Wäsche mit Natriumhydroxid, ist möglich.

Das vorgeschlagene Verfahren kann in Kombination mit einer auf Druckwechseladsorption basierenden Kohlendioxidabscheidung aus dem Rauchgas, einer membranbasierte Kohlendioxidabscheidung, einem Oxyfuelprozess, einem Absorptionsprozess wie einer Aminwäsche, oder einer Wäsche mit heißem Kaliumcarbonat verwendet werden. Als Vorteile ergeben sich eine Verringerung von Stickoxidemissionen, eine Reduzierung von Kohlendioxidverlusten, sowie der Schnittstellen mit Rauchgasproduzenten und ein Schutz der Umwelt.

Beispielsweise kann in entsprechenden Ausgestaltungen gasförmiges Kohlendioxid aus einer Tanklagergassammelleitung zur Regenerierung verwendet werden. Steht keine Niederdruckstufe für die Rückführung zur Verfügung, wie z.B. bei einer Rückführung zur alkalischen Wäsche, kann in anderen Ausgestaltungen aber auch flüssiges Kohlendioxid aus einem Tanklager verwendet werden, welches mittels Pumpe druckerhöht, verdampft und aufgeheizt wird und dann mit erhöhten Druck beispielsweise zur alkalische Wäsche zurückgeführt wird. Eine Ausgestaltung kann die Verwendung des sogenannten LICONOX-Verfahrens der Anmelderin umfassen, wie es beispielsweise bei R. Ritter et al., "LICONOX - Linde's new technology for removal of NOx and SOx integrated in the CO2 processing unit", 2nd Oxyfuel Combustion Conference, 12. bis 16. September 2011, in Yeppoon, Queensland, Australien, und anderen einschlägigen Fachpublikationen beschrieben ist. Hierbei kann das Stickstoffdioxid zusammen mit Schwefeldioxid abgetrennt werden.

Das vorgeschlagene Verfahren uns und seine Ausgestaltungen können im Allgemeinen in Kombination mit Verbrennungstechniken unter Sauerstoffnutzung mit nachfolgender Kohlendioxidabtrennung zur Dekarbonisierung verwendet werden. Ausgestaltungen können sich auch auf Oxyfuelanwendungen mit entsprechender Kohlendioxidrückgewinnung beziehen, insbesondere Anwendungen für die Zement-, Stahl- und/oder Glasindustrie, die Müllverbrennung, Kohlekraftwerke, Gaskraftwerke, Klärschlammverbrennungen oder Biomasseverbrennungen.

In Figur 1 ist ein Verfahren gemäß einer hier vorgeschlagenen Ausgestaltung schematisch veranschaulicht und insgesamt mit 100 bezeichnet.

In dem Verfahren 100 produzieren ein oder mehrere Rauchgasproduzenten 110 beliebiger Art, denen eine Entstickungseinrichtung 111 nachgeordnet sein kann, aus einem Rohrauchgasstrom 1 einen an Stickoxiden teilabgereicherten Rauchgasstrom 2, der über einen Kamin 112 ausgeführt oder, im dargestellten Beispiel, in Form eines Rauchgastransferstroms 3 in eine Kohlendioxidrückgewinnung 120 überführt wird. Die Entstickungseinrichtung 111 ist optional und nicht notwendigerweise Teil des vorgeschlagenen Verfahrens. Sie kann, falls vorhanden, insbesondere zur selektiven katalytischen Reduktion unter Verwendung von Harnstoff oder Ammoniak eingerichtet sein und einen Großteil der im Rohrausgasstrom enthaltenen Stickoxide bereits entfernen. Auch eine nichtkatalytische Entstickung kann vorgesehen sein.

Die Kohlendioxidrückgewinnung 120 umfasst im hier dargestellten Beispiel eine Niederdruckwäsche als ersten Behandlungsschritt 121, die unter Verwendung eines wässrigen Waschmittels betrieben werden kann, dessen Zufuhr aus Gründen der Übersichtlichkeit nicht gesondert veranschaulicht ist. Dem ersten Behandlungsschritt 121, der Niederdruckwäsche, wird im dargestellten Beispiel ein unter Verwendung des Rauchgastransferstroms 3 und eines unten erläuterten Stoffstroms 21 gebildeter Einsatzstrom 4 zugeführt, und in dem ersten Behandlungsschritt 121, der Niederdruckwäsche, wird ein mit Kohlendioxid und Stickoxiden beladener Waschmittelstrom als wässrige Fraktion 5 gebildet. Es verbleibt ein entsprechend behandelter Folgestrom 6.

Die Kohlendioxidrückgewinnung 120 umfasst ferner eine Kohlendioxidanreicherung als zweiten Behandlungsschritt 122, die beispielsweise unter Verwendung einer Druckwechseladsorption, Wäsche oder Membrantrenneinheit betrieben werden kann, und der der Folgestrom 6 zugeführt werden kann. In dem zweiten Behandlungsschritt 122, der Kohlendioxidanreicherung, werden ein an Kohlendioxid abgereicherter Folgestrom 7 und ein Kohlendioxid angereicherter Folgestrom 8 gebildet. Ersterer kann an die Atmosphäre abgegeben, letzterer zusammen mit einem Stoffstrom 22, siehe unten, zur Bildung eines Einsatzstroms 9 verwendet werden, der in eine Verdichtung und Kondensatabtrennung als drittem Behandlungsschritt 123 überführt wird.

In dem dritten Behandlungsschritt 123, wird ein wässriger Kondensatstrom als weitere wässrige Fraktion 10 gebildet, in dem ebenfalls Stickoxide enthalten sein können, und ein verdichteter und an kondensierbaren Komponenten abgereicherter Folgestrom 12 erhalten. Dieser kann zusammen mit einem Stoffstrom 23, siehe unten, zur Bildung eines Einsatzstroms 13 verwendet werden, der einer Hochdruckwäsche als viertem Behandlungsschritt 124 zugeführt wird, worin vergleichbar zur Niederdruckwäscher 121 ein mit Kohlendioxid und Stickoxiden beladener Waschmittelstrom als weitere wässrige Fraktion 14 gebildet wird.

Es verbleibt ein Folgestrom 15, welcher einer Aufreinigung zugeführt wird die im dargestellten Beispiel eine Verflüssigung 125 und eine Stickoxidentfernung 126 umfasst. Letztere ist insbesondere zur adsorptiven Abtrennung von Stickstoffdioxid eingerichtet. Wie erwähnt, kann sich solches Stickstoffdioxid bei der Aufbereitung aus Stickstoffmonoxid bilden. Eine weitere Kohlendioxidreinigung ist nicht gesondert veranschaulicht. Diese kann beispielsweise unter Verwendung einer Rektifikationskolonne durchgeführt werden.

Die Stickoxidentfernung 126 kann unter Verwendung eines erwärmten Regeneriergasstroms regeneriert werden, der ebenfalls aus Gründen der Übersichtlichkeit nicht gesondert veranschaulicht ist. Bei einer Regenerierung kann dabei ein mit Stickstoffdioxid beladener Regeneriergasstrom 16 gebildet werden. Ferner werden ein Produktstrom 18 und ein Abgasstrom 17 gebildet. Der Abgasstrom 17 kann beispielsweise an die Atmosphäre abgegeben, der Produktstrom 18 beispielsweise einer Sequestrierung, Lagerung oder Nutzung für andere Verfahren zugeführt werden.

Der mit Stickoxiden beladene Regeneriergasstrom 16 kann im dargestellten Beispiel in Anteilen oder wahlweise in Form eines oder mehrerer Rückführströme 21, 22, 23 zu einer Position stromauf des ersten Behandlungsschritts 121, der Niederdruckwäsche, des dritten Behandlungsschritts 122, der Verdichtung und Kondensatabtrennung, und/oder des vierten Behandlungsschritts 124, der Hochdruckwäsche, zurückgeführt werden. Die Rückführung erfolgt insbesondere zu einer Position stromab der optionalen Entstickungseinrichtung 111 aufseiten des Rauchgasproduzenten 110.

Auf diese Weise können zumindest Anteile der enthaltenen Stickoxide in die jeweiligen wässrigen Fraktionen überführt und auf diese Weise aus dem Verfahren 100 ausgeschleust werden und die Entstickungseinrichtung 111 wird nicht belastet Zu weiteren Vorteilen sei auf die vorstehenden Ausführungen verwiesen.

## Patentansprüche

1. Verfahren (100) zur Bereitstellung von flüssigem und/oder gasförmigen Kohlendioxid,
wobei ein Kohlendioxid und ein oder mehrere Stickoxide enthaltendes Gasgemisch (3) unter Erhalt eines Folgegemischs (15) einer Vorbehandlung unterworfen wird, die einen oder mehrere Behandlungsschritte (121, 123, 124) umfasst, in dem oder denen Komponenten des Gasgemischs (3) in eine oder mehrere wässrige Fraktionen (5, 10, 14) überführt werden,
wobei das Folgegemisch (15), oder ein Teil hiervon, einer Verflüssigung (125) unter Erhalt einer Flüssigphase unterworfen wird,
wobei die Flüssigphase, oder ein Teil hiervon, einer Aufreinigung (126) unterworfen wird, die die Verwendung einer Adsorptionseinheit umfasst, in der Stickstoffdioxid adsorptiv aus der Flüssigphase oder einem Teil hiervon abgetrennt werden, und die unter Bildung eines mit Stickstoffdioxid beladenen Regeneriergasstroms (16) regeneriert wird, und
wobei der Regeneriergasstrom (16) oder ein oder mehrere Anteile hiervon als ein oder mehrere Rückführströme (21, 22, 23) an einer Position, die stromauf des einen oder zumindest eines der mehreren Behandlungsschritte (121, 123, 124) liegt, in die Vorbehandlung zurückgeführt wird oder werden.

2. Verfahren (100) nach Anspruch 1,
wobei das Gasgemisch (3) unter Verwendung einer insbesondere zur selektiven katalytischen Reduktion eingerichteten Entstickungseinrichtung (111) aus einem Rohrauchgas (1) gebildet wird, und
wobei der eine oder die mehreren Rückführströme (21, 22, 23) an einer Position, die stromab der Entstickungseinrichtung (111) liegt, in die Vorbehandlung zurückgeführt wird oder werden.

3. Verfahren nach Anspruch 2,
wobei das Rohrauchgas (1) unter Verwendung einer Einrichtung (110) bereitgestellt wird, die zur Durchführung einer Verbrennung mit Sauerstoffnutzung eingerichtet ist, und die zur Zement-, Stahl- und/oder Glasproduktion, Müllverbrennung, Kohle- und/oder Gasverstromung, Klärschlamm- und/oder Biomasseverbrennung oder einer Kombination hiervon eingerichtet ist.

4. Verfahren (100) nach einem der vorstehenden Ansprüche,
wobei der eine die mehreren Behandlungsschritte (121, 123, 124) eine Niederdruckwäsche (121) bei 0,9 bis 10 bar (abs.) mit einem wässrigen Waschmittel, eine Verdichtung und Kondensatabtrennung (123) und/oder eine Hochdruckwäsche (124) bei 15 bis 50 bar (abs.) mit einem wässrigen Waschmittel umfasst oder umfassen.

5. Verfahren (100) nach einem der vorstehenden Ansprüche,
wobei das Stickstoffdioxid nach deren Abtrennung aus der einen oder den mehreren wässrigen Fraktionen (5, 10, 14) zurückgewonnen wird.

6. Verfahren (100) nach einem der vorstehenden Ansprüche,
wobei die Adsorptionseinheit (126) für eine Regenerierung unter Verwendung eines erwärmten, gasförmigen und Kohlendioxid enthaltenden Regeneriergases eingerichtet ist, der mit Stickstoffdioxid beladene Regeneriergasstrom (16) das für die Kohlendioxid des Regeneriergases enthält, und das in dem mit Stickstoffdioxid beladenen Regeneriergasstrom enthaltene Kohlendioxid in dem einen oder den mehreren Rückführströme (21, 22, 23) rückgeführt wird.

7. Verfahren (100) nach einem der vorstehenden Ansprüche,
wobei der Adsorptionseinheit (126) das Folgegemisch (15) oder ein hieraus gebildetes weiteres Folgegemisch mit einem Gehalt von 1 bis 500 ppmv Stickstoffdioxid zugeführt wird.

8. Verfahren (100) nach einem der vorstehenden Ansprüche,
wobei der Adsorptionseinheit (126) an Stickoxiden abgereichertes Kohlendioxid mit einem Gehalt von weniger als 1.5 ppmv Stickstoffdioxid entnommen wird.

9. Verfahren (100) nach Anspruch 8,
wobei der Adsorptionseinheit (126) flüssiges Kohlendioxid entnommen und in ein Kohlendioxidprodukt (18) überführt wird.

10. Anlage, die zur Bereitstellung von flüssigem Kohlendioxid eingerichtet ist,
wobei die Anlage dafür eingerichtet ist, ein Kohlendioxid und ein oder mehrere Stickoxide enthaltendes Gasgemisch (3) unter Erhalt eines Folgegemischs (15) einer Vorbehandlung zu unterwerfen, die einen oder mehrere Behandlungsschritte (121, 123, 124) umfasst, der oder die dafür eingerichtet ist oder sind, Komponenten des Gasgemischs (3) in eine oder mehrere wässrige Fraktionen (5, 10, 14) zu überführen,
wobei die Anlage dafür eingerichtet ist, das Folgegemisch (15), oder einen Teil hiervon, unter Erhalt einer Flüssigphase einer Verflüssigung (125) zu unterwerfen,
wobei die Anlage dafür eingerichtet ist, die Flüssigphase, oder einen Teil hiervon, einer Aufreinigung (126) zu unterwerfen, die die Verwendung einer Adsorptionseinheit umfasst, welche dafür eingerichtet ist, Stickstoffdioxid adsorptiv aus der Flüssigphase, oder einem Teil hiervon, abzutrennen, und die zur Regenerierung unter Bildung eines mit Stickstoffdioxid beladenen Regeneriergasstroms (16) eingerichtet ist, und
wobei die Anlage dafür eingerichtet ist, den beladenen Regeneriergasstrom (16) oder einen oder mehrere Anteile hiervon als einen oder mehrere Rückführströme (21, 22, 23) an einer Position, die stromauf des einen oder zumindest eines der mehreren Behandlungsschritte (121, 123, 124) liegt, in die Vorbehandlung zurückzuführen.

11. Anlage nach Anspruch 10, die zur Durchführung eines Verfahrens (100) nach einem der Ansprüche 1 bis 9 eingerichtet ist.
